# EUROPÄISCHE PATENTSCHRIFT

(11) **EP 1 743 725 B1**
(45) Veröffentlichungstag und Bekanntmachung des Hinweises auf die Patenterteilung: **05.09.2012**
(21) Anmeldenummer: 05015501.9
(22) Anmeldetag: 16.07.2005
(51) Int. Cl.: B23K 1/015

(54) **Dampf-Wärmebehandlungsanlage, insbesondere Kondensationslötanlage**
Vapor heat treatment installation, in particular condensation soldering installation
Installation de traitement thermique à la vapeur, en particulier installation de brasage en phase vapeur

(43) Veröffentlichungstag der Anmeldung: 17.01.2007
(73) Patentinhaber: Schulz, Adam, Dipl.-Ing. (FH), 86391 Stadtbergen (DE)
(72) Erfinder: Schulz, Adam, 86391 Stadtbergen (DE); Kunz, Thomas, 86420 Willishausen (DE)
(74) Vertreter: Vossius & Partner

(56) Entgegenhaltungen:
- EP-A- 0 966 337
- US-A- 4 766 677
- US-B1- 6 248 282

## Beschreibung

Die Erfindung betrifft eine Dampf-Wärmebehandlungsanlage, insbesondere als Kondensationslötanlage und ein Verfahren zur Wärmebehandlung eines Werkstücks gemäß dem Oberbegriff des Anspruchs 1 bzw. des Anspruchs 13. Das Kondensationslöten ist ein bekanntes Verfahren zum Verlöten elektronischer Bauteile auf Leiterplatten. Dazu werden die elektronischen Bauteile mechanisch so auf den Leiterplatten fixiert, daß ihre Anschlüsse die Leiterbahnen auf der Leiterplatte, mit denen sie zu verbinden sind und auf denen eine Lötpaste bereits aufgebracht ist, mechanisch berühren. Der Lötvorgang erfolgt in einer Lötkammer mittels heißem Dampf, dessen Temperatur über der Liquidustemperatur des Lötzinnmaterials liegt, und der an den metallischen, mit der Lötpaste versehenen Leiterbahnen kondensiert und dadurch das Lötzinn zum Schmelzen bringt und den Lötvorgang bewirkt.

Im Folgenden wird die Erfindung unter Bezugnahme auf eine Kondensationslötanlage näher beschrieben.

Das generelle technische Problem beim Verlöten elektronischer Bauteile, insbesondere integrierter elektronischer Schaltkreise mit zahlreichen Anschlussfahnen, mit elektrischen Leiterplatten besteht darin, die Wärmebeanspruchung der hitzeempfindlichen elektronischen Bauteile möglichst gering zu halten und dabei trotzdem den Lötstellen schnell und zuverlässig die notwendige Wärme zuzuführen, die zum Schmelzen des Lötzinns und Herstellen einer sicheren Lötverbindung notwendig ist. Dies bedeutet insbesondere, daß dafür Sorge getragen werden muß, daß die Verweildauer in der heißen Dampfatmosphäre der Bauteile möglichst begrenzt erfolgt, und dies kann eben dadurch erreicht werden, daß die Wärme möglichst gezielt effizient und schnell den Lötstellen zugeführt wird.

Aus der EP-0 931 618 ist eine Kondensationslötanlage bekannt, bei der eine Wärmeübertragungsflüssigkeit auf den zuvor entsprechend erhitzten Boden einer Kondensationslötkammer aufgebracht wird, um dadurch verdampft zu werden und den Kondensationslötkammerraum mit Dampf auszufüllen.

Weiter ist aus der EP-0 966 337 eine Kondensationslötanlage bekannt, bei der zwei Ausführungsformen der Dampferzeugung vorgeschlagen sind, nämlich bei einer Ausführungsform die Anordnung eines Flüssigkeitsbads mit einer Heizung am Boden einer Kondensationslötkammer, und bei der anderen Ausführungsform die Anordnung einer beheizten Platte am Boden der Kondensationskammer, auf welche mittels Düsen Flüssigkeit aufgesprüht wird, die dann verdampft. Die Steuerung der Wärmeleistung in der Kondensationskammer soll über die Dampfmenge oder die Dampftemperatur erfolgen, was jeweils durch unterschiedlich starke Beheizung des Flüssigkeitsbads oder der Heizplatte erfolgt.

Nachteilig bei diesen bekannten Kondensationslötanlagen ist der Umstand, daß die Steuerung der Dampfbedingungen in der Kondensationslötkammer schwierig, träge und ungenau ist und daß auch die Wärmeverteilung in der Kondensationslötkammer kaum gleichförmig ist. In der Regel sind zumindest vertikale Temperaturgradienten in der Kammer vorhanden. Daher sind auch die jeweiligen genauen Bedingungen in der Lötkammer nicht bekannt, und man schließt von der Flüssigkeitsbadtemperatur oder Heizplattentemperatur auf die Dampftemperatur und unterstellt eine homogene Wärmeverteilung in der Lötkammer.

Schließlich ist aus der DE 198 26 520 eine Kondensationslötanlage bekannt, bei welcher in der Kondensationslötkammer ein Dampfvolumen und oberhalb des Dampfvolumens ein dampffreier Raum geschaffen wird und wobei die Wärmeübertragung auf das Werkstück dadurch gesteuert wird, daß das Werkstück durch entsprechendes Eintauchen aus dem dampffreien Raum in das Dampfvolumen gesteuert wird. Dabei erfolgt anfänglich ein tiefes Eintauchen des Werkstücks in das Dampfvolumen zur schnellen Anfangserwärmung und dann ein Anheben in den Grenzbereich der Dampfphase für eine langsamere abschließende Erwärmung des Werkstücks. Dieses Verfahren arbeitet mit einem gewollten Temperaturgradienten in der Kondensationslötkammer, wobei aber die erreichbare Genauigkeit der Temperatursteuerung bei diesem Verfahren sehr fragwürdig erscheint.

Eine Anlage mit den Merkmalen des Oberbegriffs des Anspruchs 1 aus der US-A-4,766,677 bekannt.

Aufgabe der Erfindung ist es, eine Dampf-Wärmebehandlungsanlage zu schaffen, bei welcher die Steuerung der Wärmeübertragungsverhältnisse schneller und genauer erfolgen kann, und die Bedingungen in der Behandlungskammer besser steuerbar und bekannt sind.

Diese Aufgabe wird gemäß der Erfindung durch die im Anspruch 1 angegebene Dampf-Wärmehandlungsanlage gelöst. Vorteilhafte Ausgestaltungen und Weiterbildungen der Erfindung sind Gegenstand der Unteransprüche.

Die erfindungsgemäße Anlage arbeitet mit einer direkten Regelung der Dampftemperatur und dadurch des Temperaturgradienten zwischen Dampf und Werkstück, womit beliebige Temperaturgradienten sowie eine gleichmäßige Temperaturverteilung in der Kondensationslötkammer und dadurch eine Verbesserung des Wärmeübergangs durch Tropfen- und Filmkondensation erreichbar ist.

Die Erfindung wird nachstehend unter Bezugnahme auf die anliegenden Zeichnungen anhand von Ausführungsbeispielen mehr im Einzelnen erläutert. In den Zeichnungen zeigt:
- Fig. 1: ein schematisches Blockschaltbild einer ersten Ausführungsform einer Kondensationslötanlage nach der Erfindung,
- Fig. 2: ein schematisches Blockschaltbild einer zweiten Ausführungsform einer Kondensationslötanlage nach der Erfindung, und
- die Fig. 3A und 3B: eine dritte Ausführungsform einer Kondensationslötanlage nach der Erfindung in zwei verschiedenen Einstellpositionen.

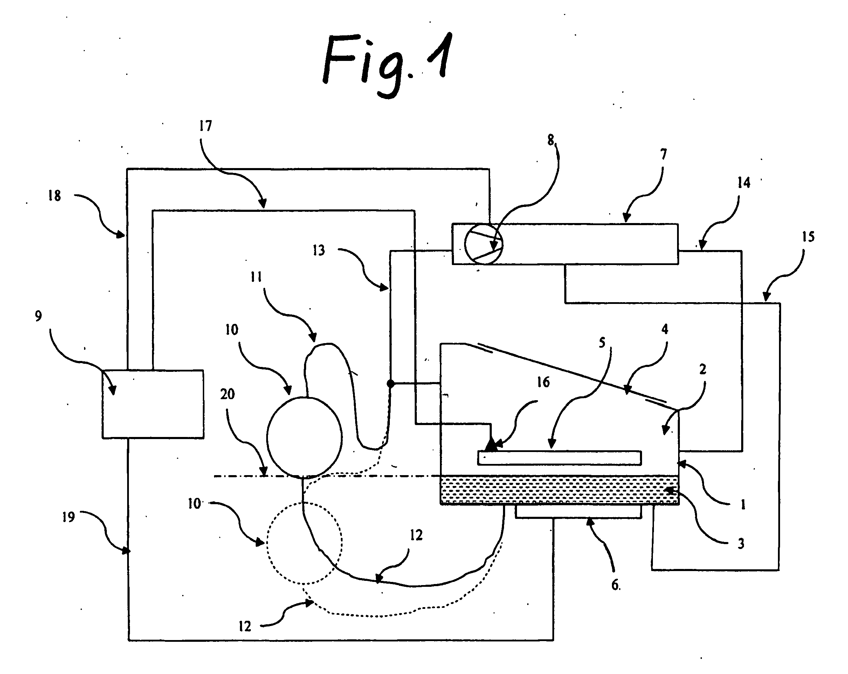

Die in Fig. 1 dargestellt Kondensationslötanlage stellt ein in sich geschlossenes, gas- und dampfdichtes System dar. Sie umfasst eine Kondensationslötkammer 1 mit einem Kammerraum 2. Im Bodenbereich der Kondensationslötkammer 1 ist ein Flüssigkeitsbad 3 angeordnet, das mittels einer Heizung 6 beheizbar ist, um Flüssigkeit zu verdampfen und eine Dampfatmosphäre im Kammerraum 2 zu erzeugen. Das Flüssigkeitsbad 3 mit der Heizung 6 bildet also einen Dampferzeuger.

Die Lötkammer 1 verfügt über mindestens eine Zugangsöffnung, die im Ausführungsbeispiel durch eine Deckelklappe 4, vorzugsweise mit Sichtfenster, realisiert ist. Die Deckelklappe 4 mitsamt der angrenzenden Kammerdecke ist relativ zur Horizontalen geneigt, damit ein einfacher Kondensatabfluß erfolgen kann. Der durch die Deckelklappe 4 gebildete Zugang ermöglicht das Einbringen und das Herausnehmen eines Werkstücks 5 in den bzw. aus dem Kammerraum 2.

Dem Kammerraum 2 ist eine Kühleinrichtung in Gestalt eines Kondensators 7 zugeordnet, der über eine Dampfabsaugleitung 13 und eine Dampfrückführleitung 14 mit dem Kammerraum 2 verbunden ist und ein Umwälzgebläse 8 enthält. Der Kondensator 7 kann luftgekühlt sein, aber es kommen auch andere Kühlmöglichkeiten wie Wasserkühlung, Peltierelemente in Betracht. Eine Kondensatrückflußleitung 15 führt vom Kondensator 7 in das Flüssigkeitsbad 3. Eine Steuer- und Regeleinheit 9 steuert den Betrieb der Kondensationslötanlage und die Dampfbedingungen in dem Kammerraum 2. Ein Temperatursensor 16 ist im Kammerraum 2 und dort vorzugsweise am Werkstück 5 bzw. an dem nicht eigens dargestellten Werkstückträger angeordnet und über eine Messleitung 17 mit der Steuer- und Regeleinheit 9 verbunden. Die Steuer- und Regeleinheit 9 steuert in Abhängigkeit von manuell oder in Gestalt eines vorgegebenen Programms eingegebenen Vorgaben die Betriebsabläufe und Betriebsverhältnisse im Kammerraum 2. Sie erzeugt in Abhängigkeit dieser Vorgaben den jeweils gewünschten Temperaturgradienten zwischen Dampfatmosphäre und Werkstück im Kammerraum 2.

Zum Löten wird das Werkstück 5 durch die Deckelklappe 4 in den Kammerraum 2 eingebracht, was manuell oder automatisiert erfolgen kann. Dann wird die Deckelklappe 4 gas- und dampfdicht verschlossen. Gesteuert durch die Steuer- und Regeleinheit wird nun die Heizung 6 eingeschaltet und das Flüssigkeitsbad 3 bis zur Verdampfungstemperatur kontrolliert erwärmt. Dabei wird entsprechend der Flüssigkeitstemperatur Dampf erzeugt. Ein Teil dem Dampfes kondensiert am Werkstück 5 und gibt dort seine Kondensationswärme an das Werkstück ab. Über die Steuerung der Heizung 6 wird die Temperatur der Verdampfungsflüssigkeit im Flüssigkeitsbad 3 und damit auch die Dampfmenge und Dampftemperatur nach jeweils beliebig wählbaren Vorgaben gesteuert. Die Lötkammer 1 mit dem im Kammerraum 2 angeordneten Temperatursensor 16 und dem durch die Heizung 6 beheizten Flüssigkeitsbad 3 und mit dem zugeordneten Kondensator 7 mit dem Umwälzgebläse 8 bildet mit der Steuer- und Regeleinheit 9 einen geschlossenen Regelkreis zur Regelung der Dampfbedingungen im Kammerraum 2 nach jeweils vorgegebenen Sollwerten oder Sollwertkurven. Stellt die Steuer- und Regeleinheit 9 über den Temperatursensor 16 und die Messleitung 17 fest, daß die Dampftemperatur und somit die Prozesstemperatur im Kammerraum 2 zu niedrig ist, steuert die Steuer- und Regeleinheit 9 über eine Heizungssteuerleitung 19 die Heizung 6 im Sinne eines weiteren Aufheizens an. Übersteigt die erfasste Dampftemperatur in der Behandlungskammer 2 den Sollwert, schaltet die Steuer- und Regeleinheit 9 zunächst die Heizung 6 über die Heizungssteuerleitung 19 ab. Sodann aktiviert sie über die Gebläsesteuerleitung 18 das Umwälzgebläse 8, wodurch über die Dampfabsaugleitung 13 Dampf aus dem Kammerraum 2 abgesaugt und durch den Kondensator 7 geblasen wird. Dort kondensiert der Dampf zumindest teilweise, wodurch der Dampf entsprechend abgekühlt wird. Über die Dampfrückführleitung 14 gelangt der abgekühlte Dampf aus dem Kondensator 7 zurück in den Kammerraum 2, wodurch die dortige Dampfatmosphäre ebenfalls abgekühlt wird. Wird der Sollwert wieder unterschritten, schaltet die Steuer- und Regeleinheit 9 das Gebläse 8 ab und die Heizung 6 wieder ein.

Die im Zuge der Dampftemperaturregelung erfolgende Umwälzung der Dampfatmosphäre im Kammerraum 2 über den Kondensator 7 und das Umwälzgebläse 8 führt zu Verwirbelungen im Kammerraum 2 und damit zu einem Ausgleich und einer Homogenisierung der Temperatur der Dampfatmosphäre in dem Kammerraum 2. Gleichzeitig führt die Verwirbelung der Dampfatmosphäre auch zur Bildung von Kondensationskeimen, die teilsweise als Tröpfchen am Werkstück 5 kondensieren. Diese Tröpfchenkondensation ist wirkungsvoller als die Dampfkondensation, wodurch die Wärmeübertragung auf das Werkstück wesentlich verbessert wird.

Entsprechend dem Aufheizprozeß in der Lötkammer 1 läßt sich das Werkstück 5 aber auch kontrolliert abkühlen. Dabei kann nach einem vorgegebenen Temperaturprofil über die Steuer- und Regeleinheit 9 eine kontrollierte Abkühlung der Dampfatmosphäre unter Einsatz des Umwälzgebläses 8 und des Kondensators 7 sowie natürlich auch der Heizung 6 bei momentanen Unterschreiten des augenblicklichen Sollwerts zur Zurückfahren der Temperatur der Dampfatmosphäre im Kammerraum 2 erfolgen.

Ist das Werkstück 5 auf die gewünschte Temperatur abgekühlt worden, kann es durch die Deckelklappe 4 entnommen werden. Vor der Entnahme des Werkstücks kann das Umwälzgebläse 8 noch eine kurze Weile eingeschaltet bleiben, um möglichst viel Dampf aus dem Kammerraum 2 über den Kondensator 7 abzukondensieren.

Der Kondensator 7 dient auch dazu, während der Behandlung des Werkstücks im Kammerraum 2 überschüssigen Dampf abzukondensieren, damit der Druck im Kammerraum 2 entweder gar nicht oder nur geringfügig steigt. Dies funktioniert nach dem folgenden Prinzip: Steigt der Druck in dem Kammerraum 2 aufgrund der zunehmenden Temperatur und der damit verbundenen Dampfproduktion, so strömt ein Teil des Dampfes über die Leitung 13 in den Kondensator 7 und kondensiert dort ab. Das Kondensat fließt über die Kondensatrückflußleitung 15 in das Flüssigkeitsbad 3 zurück. Dadurch wird Überdruck abgebaut und der Druck im Kammerraum 2 auf Atmosphärenniveau gehalten.

Um Flüssigkeitsverluste aus dem Flüssigkeitsbad 3 und der daraus erzeugten Dampfatmosphäre zu minimieren, kann zusätzlich zum Abkondensieren des Dampf im Kondensator 7 nach Beendigung des Lötvorgangs vor dem Herausnehmen des Werkstücks aus dem Kammerraum 2 auch noch das Flüssigkeitsbad 3 vorübergehend entleert werden, um bei offener Deckelklappe 3 die Dampferzeugung ganz zu unterbrechen. Dazu ist ein beweglicher Flüssigkeitsvorratsbehälter 10 außerhalb der Lötkammer 1 vorgesehen, der zwischen einer angehobenen Position (in Volllinien gezeigt) und einer abgesenkten Position (gestrichelt angedeutet) beweglich ist, und der über eine flexible Leitung 12 mit dem Flüssigkeitsbad 3 verbunden ist sowie über eine Druckausgleichsleitung 11 mit der Dampfabsaugleitung 13 oder direkt mit dem Kammerraum verbunden sein kann. In der angehobenen Position befindet sich der Vorratsbehälter 10 oberhalb oder weitgehend oberhalb des Flüssigkeitsspiegels 20 des Flüssigkeitsbads 3, so daß die Flüssigkeit in das Flüssigkeitsbad 3 abgeflossen ist und dieses füllt, und in der abgesenkten Position befindet sich der Vorratsbehälter unterhalb des Bodenniveaus des Flüssigkeitsbads 3, so daß der Inhalt des Flüssigkeitsbads 3 in den Vorratsbehälter 10 abfließt. Es versteht sich, daß damit je nach volumenmäßiger Auslegung des Vorratsbehälters 10 und entsprechender Steuerung der Höhenposition auch ein Flüssigkeitspegelausgleich im Flüssigkeitsbad 3 erfolgen kann. Dabei kann der Flüssigkeitsvorratsbehälter 10 auch über eine eigene Heizeinrichtung (nicht dargestellt) beheizt und damit das jeweils darin befindliche Flüssigkeitsvolumen auf eine wählbare Temperatur vorgeheizt werden.

Beim Ausführungsbeispiel ist der Flüssigkeitsvorratsbehälter 10, wie oben erläutert, vertikal beweglich angeordnet, um ein Füllen oder Entleeren und eine Flüssigkeitspegeleinstellung des Flüssigkeitsbads 3 vornehmen zu können. Es versteht sich, daß der Flüssigkeitsvorratsbehälter auch feststehend angeordnet sein kann und zum Füllen und Entleeren des Flüssigkeitsbads eine Pumpe vorgesehen sein kann.

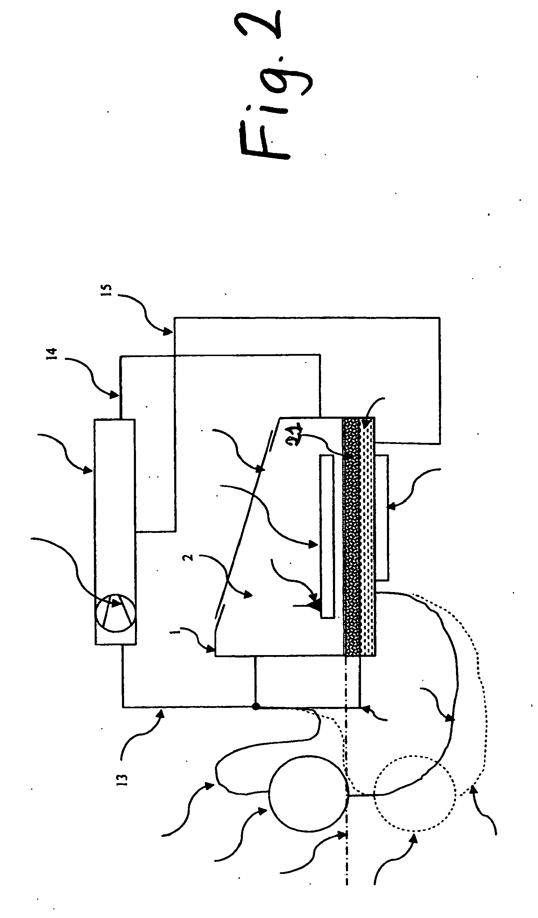

Fig. 2 zeigt eine abgewandelte Ausführungsform der erfindungsgemäßen Kondensationslötanlage. In Fig. 2 sind gleiche Elemente mit den gleichen Bezugszeichen wie in Fig. 1 versehen. Der Einfachheit halber ist in Fig. 2 die Steuer- und Regeleinheit mit den ihr zugeordneten Meß- und Steuerleitungen weggelassen.

Die Ausführungsform nach Fig. 2 unterscheidet sich nur dadurch von der Ausführungsform nach Fig. 1, daß das Flüssigkeitsbad 3 modifiziert ist. Bei der Ausführungsform nach Fig. 2 ist das Flüssigkeitsbad 3 durch eine Dampfbremse 21 abgedeckt. Diese Dampfbremse kann durch eine poröse, flüssigkeitsspeichernde Struktur gebildet sein. Das kann beispielsweise ein feinmaschiges Gitter, auf dem eine gleichmäßige Sandschicht liegt, oder ein poröser Keramikkörper oder eine sonstige Struktur mit der Eigenschaft sein, daß Flüssigkeiten aufgenommen, gespeichert und wieder abgegeben werden können. Die Wirkung der Dampfbremse hängt von jeweiligen Flüssigkeitsspiegel innerhalb der Dampfbremse 21 ab. Die Dampfbremswirkung ist am größten, wenn der Flüssigkeitsspiegel sich unterhalb der Dampfbremse befindet, und die Dampfbremswirkung nimmt um so weiter ab, je höher der Flüssigkeitsspiegel innerhalb der Dampfbremse angehoben wird. Dies kann durch den beweglichen Vorratsbehälter 10 oder eine andere gleichwirkende Einrichtung gesteuert werden.

Indem auf diese Weise die Lage des Flüssigkeitsspiegels innerhalb der Dampfbremse gesteuert wird, kann die Dampferzeugung reguliert werden.

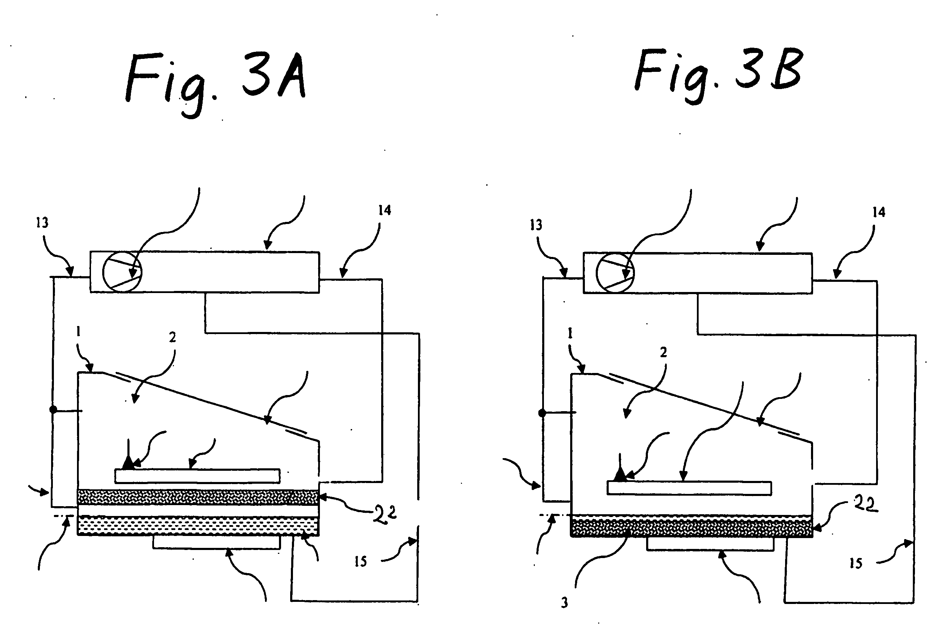

Die Fig. 3A und 3B zeigen eine weiter modifizierte Ausführungsform, bei der wiederum das Flüssigkeitsbad 3 durch eine Dampfbremse abgedeckt ist. Während bei der Ausführungsform nach Fig. 2 die Dampfbremse 21 ortsfest angeordnet ist, ist bei der Ausführungsform nach den Fig. 3A, 3B eine in ihrer Höhenposition verstellbare Dampfbremse 22 vorgesehen. Der Verstellung der Höhenposition der Dampfbremse 22 kann also die Lage des Flüssigkeitsspiegels innerhalb der Dampfbremse variiert werden. Bei der Ausführungsform nach den Fig. 3A, 3B ist daher eine Einrichtung zur Veränderung des Flüssigkeitsspiegels im Flüssigkeitsbad 3, wie sie bei der Ausführungsform nach Fig. 2 durch den höhenbeweglichen Vorratsbehälter 10 gebildet ist, nicht erforderlich. Fig. 3A zeigt die Dampfbremse 22 in einer über den Flüssigkeitsspiegel des Flüssigkeitsbads 3 angehobenen Position, wodurch die Dampfabgabe in den Kammerraum 2 minimiert wird, und Fig. 3A zeigt die Dampfbremse 22 bis unterhalb des Flüssigkeitsspiegels des Flüssigkeitsbads 3 in dieses eingetaucht, so daß in dieser Position die maximale Dampfabgabe in den Kammerraum 2 erfolgt.

Abweichend von den Ausführungsbeispielen nach den Fig. 2 und 3A, 3B kann statt einer Dampfbremse auch eine zwischen einer Offen- und einer Schließstellung verstellbare Dampfsperre vorgesehen sein, beispielsweise in Gestalt von zwei mit Öffnungen versehenen, quer zueinander verschiebbaren Platten um wahlweise die Öffnungen ganz oder teilweise zur Deckung zu bringen oder zu verschließen.

## Patentansprüche

1. Dampf-Wärmebehandlungsanlage mit
einer Behandlungskammer (1) mit einem Kammerraum (2) und mindestens einer Zugangsöffnung (4) zum Einbringen bzw. Herausnehmen eines Werkstücks (5),
einer Dampferzeugungseinrichtung (3, 6) mit einem Flüssigkeitsbad (3) zum Erzeugen einer Dampfatmosphäre in dem Kammerraum (2),
einem außerhalb der Behandlungskammer (1) angeordneten und mit der Behandlungskammer (1) über Dampfzuführ- und Dampfrückleitungen (13, 14) verbundenen Kondensator (7) sowie mit Mitteln (8) zum Zirkulieren von Dampf aus dem Kammerraum (2) durch dem Kondensator (7),
einer außerhalb der Behandlungskammer (1) angeordneten, mit dem Kondensator (7) und dem Flüssigkeitsbad (3) verbundenen Kondensatrückflussleitung (15),
einer Steuer- und Regeleinheit (9) zur Steuerung bzw. Regelung der Dampfatmosphärenbedingungen im Kammerraum (2) durch Steuerung des Betriebs des Dampferzeugers (3, 6) und der Zirkulationsmittel (8) in Abhängigkeit von einer wählbaren Sollwerteingabe und einer Istwerterfassung im Kammerraum (2) durch mindestens einen Temperatursensor (16),
**dadurch gekennzeichnet, dass** die Steuer- und Regeleinheit so ausgestattet ist, dass über die Dampfzuführ- und Dampfrückleitungen (13, 14) nur Dampf zirkuliert.

2. Dampf-Wärmebehandlungsanlage nach Anspruch 1, wobei der Dampferzeuger durch ein im Bodenbereich der Behandlungskammer (1) angeordnetes Flüssigkeitsbad (3) und eine diesem zugeordnete Heizung (6) gebildet ist.

3. Dampf-Wärmebehandlungsanlage nach Anspruch 1 oder 2, wobei der Kondensator (7) ein Dampfkondensator ist.

4. Dampf-Wärmebehandlungsanlage nach Anspruch 3, wobei der Dampfkondensator (7) über eine Kondensatrückleitung (15) mit dem Flüssigkeitsbad (3) verbunden ist.

5. Dampf-Wärmebehandlungsanlage nach einem der Ansprüche 1 bis 4, wobei dem Flüssigkeitsbad (3) eine Einrichtung (10) zum wahlweisen Füllen und Entleeren des Flüssigkeitsbads und gegebenenfalls zum wahlweisen Einstellen des Flüssigkeitspegels (20) des Flüssigkeitsbads zugeordnet ist.

6. Dampf-Wärmebehandlungsanlage nach Anspruch 5, wobei die Einrichtung (10) zum wahlweisen Füllen und Entleeren bzw. zur Flüssigkeitspegeleinstellung des Flüssigkeitsbads (3) ein Flüssigkeitsvorratsbehälter ist, der vertikal beweglich und über eine Leitung (12) mit dem Flüssigkeitsbad (3) verbunden ist.

7. Dampf-Wärmebehandlungsanlage nach Anspruch 5, wobei die Einrichtung (10) zum wahlweisen Füllen und Entleeren bzw. zur Flüssigkeitspegeleinstellung des Flüssig-keitsbads einen Flüssigkeitsvorratsbehälter sowie zwischen diesen und das Flüssigkeitsbad geschaltete Pumporgane umfasst.

8. Dampf-Wärmebehandlungsanlage nach Anspruch 6 oder 7, wobei der Flüssigkeitsvorratsbehälter mittels einer ihm zugeordneten Heizeinrichtung beheizbar ist.

9. Dampf-Wärmebehandlungsanlage nach einem der Ansprüche 2 bis 8, wobei dem Flüssigkeitsbad (3) eine Dampfbremse (21) in Gestalt einer eine gewisse vertikale Dicke aufweisenden porösen Schicht zugeordnet ist und wobei der Flüssigkeitsspiegel (20) des Flüssigkeitsbads (3) relativ zur vertikalen Dicken ausdehnung der Dampfbremse (21) wahlweise veränderbar ist.

10. Dampf-Wärmebehandlungsanlage nach Anspruch 9, wobei die Dampfbremse (21) beheizbar ist.

11. Dampf-Wärmebehandlungsanlage nach Anspruch 9 oder 10, wobei die Dampfbremse (22) relativ zum Flüssigkeitsspiegel (20) des Flüssigkeitsbads (3) vertikal bewegbar ist.

12. Dampf-Wärmebehandlungsanlage nach einem der Ansprüche 1 bis 8, wobei zwischen dem Dampferzeuger und dem Kammerraum (2) eine zwischen einer Offenstellung und einer Schließstellung verstellbare Dampfsperre angeordnet ist.

13. Verfahren zur Wärmebehandlung eines Werkstücks in einer Behandlungskammer (1), die einen Kammerraum (2), mindestens eine Zugangsöffnung (4) und eine Dampferzeugungseinrichtung (3, 6) zur Erzeugung einer Dampfatmosphäre in dem Kammerraum (2) aufweist, wobei der Dampfzustand im Kammerraum (2) einerseits durch Steuerung des Dampferzeugers und andererseits durch bedarfsweises Zirkulieren von aus dem Kammerraum (2) über eine Dampfzuführleitung (13) abgezogenen Dampf durch einen Kondensator (7) und zurück über eine Damphückleitung (14) in den Kammerraum (2) gesteuert bzw. geregelt wird, wobei das Kondensat über eine Kondensatrückflussleitung (15) in ein Flüssigkeitsbad (3) der Dampferzeugungseinrichtung (3, 6) zurückgeleitet wird, **dadurch gekennzeichnet, dass** über die Dampfzuführ- und Dampfrückleitungen (13, 14) nur Dampf zirkuliert wird.

## Claims

1. A vapour heat treatment installation comprising
a treatment chamber (1) comprising a chamber room (2) and at least one access opening (4) for introducing or removing a workpiece (5),
a vapour generation means (3, 6) comprising a liquid bath (3) for generating a vapour atmosphere in the chamber room (2),
a condenser (7) arranged outside the treatment chamber (1) and communicating with the treatment chamber (1) via vapour supply and vapour return lines (13, 14) as well as comprising means (8) for circulating vapour from the chamber room (2) through the condenser (7),
a condensate reflux line (15) arranged outside the treatment chamber (1) and communicating with the condenser (7) and the liquid bath (3),
a control unit (9) for controlling the vapour atmosphere conditions in the chamber room (2) by controlling the operation of the vapour generator (3, 6) and of the circulation means (8) responsive to a selectable target value input and an actual value detection in the chamber room (2) by at least one temperature sensor (16),
**characterized in that** the control unit is configured such that only vapour circulates via the vapour supply and vapour return lines (13, 14).

2. The vapour heat treatment installation according to claim 1, wherein the vapour generator is constituted by a liquid bath (3) arranged in the bottom area of the treatment chamber (1) and by a heater (6) assigned to said liquid bath (3).

3. The vapour heat treatment installation according to claim 1 or 2, wherein the condenser (7) is a vapour condenser.

4. The vapour heat treatment installation according to claim 3, wherein the vapour condenser (7) communicates with the liquid bath (3) via a condensate return line (15).

5. The vapour heat treatment installation according to any one of claims 1 to 4, wherein a means (10) for selectively filling and emptying the liquid bath (3) and optionally for selectively adjusting the liquid level (20) of the liquid bath is assigned to the liquid bath.

6. The vapour heat treatment installation according to claim 5, wherein the means (10) for selectively filling and emptying the liquid bath (3) and for adjusting the liquid level of the liquid bath (3) is a liquid reservoir which is vertically movable and communicates with the liquid bath (3) via a line (12).

7. The vapour heat treatment installation according to claim 5, wherein the means (10) for selectively filling and emptying the liquid bath and for adjusting the liquid level of the liquid bath comprises a liquid reservoir as well as pumping organs connected between said liquid reservoir and the liquid bath.

8. The vapour heat treatment installation according to claim 6 or 7, wherein the liquid reservoir is heatable via a heating means assigned to it.

9. The vapour heat treatment installation according to any one of claims 2 to 8, wherein a vapour barrier (21) in the form of a porous layer having a certain vertical thickness is assigned to the liquid bath (3) and wherein the liquid level (20) of the liquid bath (3) is selectively changeable relative to the vertical thickness extension of the vapour barrier (21).

10. The vapour heat treatment installation according to claim 9, wherein the vapour barrier (21) is heatable.

11. The vapour heat treatment installation according to claim 9 or 10, wherein the vapour barrier (22) is vertically movable relative to the liquid level (20) of the liquid bath (3).

12. The vapour heat treatment installation according to any one of claims 1 to 8, wherein a vapour barrier adjustable between an open position and a closed position is arranged between the vapour generator and the chamber room (2).

13. A method for the heat treatment of a workpiece in a treatment chamber (1) comprising a chamber room (2), at least one access opening (4) and a vapour generation means (3, 6) for generating a vapour atmosphere in the chamber room (2), wherein the vapour condition in the chamber room (2) is controlled, on the one hand, by controlling the vapour generator and, on the other hand, by circulating, as required, vapour removed from the chamber room (2) via a vapour supply line (13) through a condenser (7) and back via a vapour return line (14) into the chamber room (2), wherein the condensate is reycled via a condensate reflux line (15) into a liquid bath (3) of the vapour generation means (3, 6), **characterized in that** only vapour is circulated via the vapour supply and vapour return lines (13, 14).

## Revendications

1. Installation de traitement thermique à la vapeur comprenant
une chambre de traitement (1) comprenant un espace de chambre (2) et au moins une ouverture d'accès (4) pour introduire ou enlever une pièce de travail (5), respectivement,
un dispositif de génération de vapeur (3, 6) comprenant un bain liquide (3) pour générer une atmosphère de vapeur dans l'espace de chambre (2),
un condenseur (7) arrangé à l'extérieur de la chambre de traitement (1) et étant lié avec la chambre de traitement (1) au moyen de lignes d' alimentation et d' évacuation de vapeur (13, 14) et comprenant des moyens (8) pour circuler la vapeur de l'espace de chambre (2) à travers le condenseur (7),
une ligne de reflux de condensat (15) arrangée à l'extérieur de la chambre de traitement (1) et étant liée avec le condenseur (7) et le bain liquide (3),
une unité de réglage (9) pour régler les conditions d'atmosphère de vapeur dans l'espace de chambre (2) en réglant l'opération du générateur de vapeur (3, 6) et des moyens de circulation (8) en fonction d'une entrée de la valeur de consigne sélectionnable et d'une détection de la valeur réelle dans l'espace de chambre (2) par au moins un détecteur de température (16),
**caractérisée en ce que** l'unité de réglage soit aménagé de sorte que seulement de la vapeur circule par les lignes d' alimentation et d' évacuation de vapeur (13, 14).

2. Installation de traitement thermique à la vapeur selon la revendication 1, dans laquelle le générateur de vapeur est constituée d'un bain liquide (3) arrangé dans la région de fond de la chambre de traitement (1) et d'un chauffage (6) associé avec celui-ci.

3. Installation de traitement thermique à la vapeur selon la revendication 1 ou 2, dans laquelle le condenseur (7) est un condenseur de vapeur.

4. Installation de traitement thermique à la vapeur selon la revendication 3, dans laquelle le condenseur de vapeur (7) est lié avec le bain liquide (3) au moyen d'une ligne d'évacuation de condensat (15).

5. Installation de traitement thermique à la vapeur selon l'une quelconque des revendications 1 à 4, dans laquelle un dispositif (10) pour facultativement remplir et évacuer le bain liquide et, le cas échéant, pour facultativement régler le niveau de liquide (20) du bain liquide est associé au bain liquide (3).

6. Installation de traitement thermique à la vapeur selon la revendication 5, dans laquelle le dispositif (10) pour facultativement remplir et évacuer et pour régler le niveau de liquide du bain liquide (3), respectivement, est un réservoir de liquide étant lié de manière verticalement mobile et par une ligne (12) avec le bain liquide (3).

7. Installation de traitement thermique à la vapeur selon la revendication 5, dans laquelle le dispositif (10) pour facultativement remplir et évacuer et pour régler le niveau de liquide du bain liquide, respectivement, comprend un réservoir de liquide ainsi que des organes de pompe intercalées entre le réservoir de liquide et le bain liquide.

8. Installation de traitement thermique à la vapeur selon la revendication 6 ou 7, dans laquelle le réservoir de liquide est réchauffable au moyen d'un dispositif de chauffage associé à celui-ci.

9. Installation de traitement thermique à la vapeur selon l'une quelconque des revendications 2 à 8, dans laquelle une barrière de vapeur (21) en forme d'une couche poreuse d'une certaine épaisseur verticale est associée au bain liquide (3) et dans laquelle le niveau de liquide (20) du bain liquide (3) est facultativement variable en fonction de l'expansion de l'épaisseur verticale de la barrière de vapeur (21).

10. Installation de traitement thermique à la vapeur selon la revendication 9, dans laquelle la barrière de vapeur (21) est réchauffable.

11. Installation de traitement thermique à la vapeur selon la revendication 9 ou 10, dans laquelle la barrière de vapeur (22) est verticalement mobile en fonction du niveau de liquide (20) du bain liquide (3).

12. Installation de traitement thermique à la vapeur selon l'une quelconque des revendications 1 à 8, dans laquelle une barrière de vapeur qui est ajustable entre une position ouverte et une position fermée est aménagée entre le générateur de vapeur et l'espace de chambre (2).

13. Procédé de traitement thermique d'une pièce de travail dans une chambre de traitement (1) comprenant une espace de chambre (2), au moins une ouverture d'accès (4) et un dispositif de génération de vapeur (3, 6) pour générer une atmosphère de vapeur dans l'espace de chambre (2), dans lequel la condition de vapeur dans l'espace de chambre (2) est réglée d'une part par réglage du générateur de vapeur et d'autre part par circulation, selon les besoins, de la vapeur enlevée de l'espace de chambre (2) via une ligne d'alimentation de vapeur (13) à travers le condenseur (7) et retour par une ligne d'évacuation de vapeur (14) dans l'espace de chambre (2), le condensat étant recyclé via une ligne de reflux de condensat (15) dans un bain liquide (3) du dispositif de génération de vapeur (3, 6), **caractérisé en ce que** seulement de la vapeur est circulée via les lignes d'alimentation et d'évacuation de vapeur (13, 14).
